# EUROPÄISCHE PATENTSCHRIFT

(11) **EP 0 488 951 B1**
(45) Veröffentlichungstag und Bekanntmachung des Hinweises auf die Patenterteilung: **25.09.1996**
(21) Anmeldenummer: 91810908.3
(22) Anmeldetag: 21.11.1991
(51) Int. Cl.: C08L 57/08, C08K 5/00, C08K 13/02

(54) **Stabilisierte chlorhaltige Polymere**
Stabilized chlorinated polymers
Polymères chlorés stabilisés

(30) Priorität: 30.11.1990 CH 3800/90
(43) Veröffentlichungstag der Anmeldung: 03.06.1992
(73) Patentinhaber: CIBA-GEIGY AG, 4002 Basel (CH)
(72) Erfinder: Wirth, Hermann O., Dr., W-6140 Bensheim 3 (DE); Sander, Hans Jürgen, W-6143 Lorsch (DE); Hartmann, Olaf-René, Dr., W-6140 Bensheim 2 (DE)

(56) Entgegenhaltungen:
- EP-A- 0 290 386
- EP-A- 0 290 391
- EP-A- 0 419 794

## Beschreibung

Die Erfindung betrifft stabilisierte chlorhaltige Polymerzusammensetzungen enthaltend ein sterisch gehindertes Amin in Kombination mit einer Zinkverbindung.

Es ist bekannt, dass sterisch gehinderte Amine, beispielsweise Derivate des 2,2,6,6-Tetramethylpiperidins, ausgezeichnete Stabilisatoren für Polymere gegen Schädigung durch kurzwelliges Licht sind. In Polyvinylchlorid oder anderen chlorhaltigen Polymeren führt der Zusatz solcher sterisch gehinderter Amine jedoch zu Verfärbungen während der thermoplastischen Verarbeitung oder im Gebrauch. Erst durch Zusatz von Costabilisatoren gelingt es, diese Verfärbungen zu verhindern oder zu vermindern.

So sind in der JP-A-82/168933 Folien aus weichgemachtem Polyvinylchlorid beschrieben, die mit einem sterisch gehinderten Amin und einem UV-Absorber gegen Licht geschützt sind und als Costabilisatoren Zinkstearat, Bariumstearat und epoxydiertes Soyaöl enthalten. In der JP-A-86/163965 wird die Stabilisierung von PVC mit einem sterisch gehinderten Amin und einem Ca/Zn-Stabilisator oder einer Organozinnverbindung beschrieben.

In der JP-A-88/178155 wird ebenfalls die Stabilisierung von PVC mit einem gehinderten Amin und Calciumstearat, Zinkstearat und einer Organozinnverbindung beschrieben. In der EP-A-237 485 wird die Kombination von sterisch gehinderten Aminen mit Organozinn-Stabilisatoren zur Stabilisierung von Hart-PVC empfohlen, wobei als weitere Zusätze Titandioxid und Calciumstearat verwendet werden können.

In der EP-A-421 933 wird die Kombination von sterisch gehinderten Aminen mit Zinkverbindungen und einem Hydrotalcit zur Stabilisierung chlorhaltiger Polymere vorgeschlagen, wobei als weitere Zusätze 1,3-Diketone und Calciumverbindungen verwendet werden können.

In der EP-A-432 096 wird die Kombination von sterisch gehinderten Aminen mit Zinkverbindungen und einem Treibmittel oder Schäumungsmittel vorgeschlagen, wobei zusätzlich auch Calciumverbindungen und 1,3-Diketone verwendet werden können.

Es wurde nunmehr gefunden, dass Kombinationen von sterisch gehinderten Aminen mit Zinkverbindungen auch ohne eine zweite Metallverbindung und ohne Hydrotalcit und ohne Treibmittel sehr gute Thermostabilität liefern.

Die Erfindung betrifft daher eine stabilisierte chlorhaltige Polymerzusammensetzung, enthaltend
a) mindestens ein chlorhaltiges Polymer,
b) mindestens ein sterisch gehindertes Amin und
c) mindestens eine organische oder anorganische Zinkverbindung in Abwesenheit einer organischen Metallverbindung, die Carboxylat ist, in Abwesenheit einer Verbindung aus der Reihe der Hydrotalcite und in Abwesenheit eines Treibmittels oder Schäumungsmittels, sowie ein Verfahren zum Stabilisieren von chlorhaltigen Polymeren gegen Schädigung durch Wärme und licht durch Zusatz von b) und c), gegebenenfalls mit weiteren Zusatzstoffen.

Bevorzugt enthält die Polymerzusammensetzung ausserdem
d) mindestens eine 1,3-Dicarbonylverbindung. Diese 1,3-Dicarbonylverbindung kann auch als Chelat der zweiwertigen Metalle Zink, Calcium, Magnesium oder Barium vorliegen.

Das chlorhaltige Polymer kann z.B. ein Homopolymer bzw. Copolymer des Vinylchlorids oder des Vinylidenchlorids sein oder ein nachchloriertes Polymer bzw. Copolymer des Vinylchlorids oder des Vinylidenchlorids, ein chloriertes Polyolefin, wie z.B. ein chloriertes Polyethylen, ein chloriertes Polymer bzw. Copolymer des Styrols oder des Butadiens oder ein chlorierter Kautschuk oder ein Kautschuk-Hydrochlorid, sowie eine Mischung eines solchen chlorhaltigen Polymers mit einem anderen anderen chlorhaltigen oder chlorfreien Polymeren. Bevorzugt ist das chlorhaltige Polymer ein Polyvinylchlorid oder ein mindestens 80 % Vinylchlorid enthaltendes Copolymer oder eine Mischung (Polyblend) eines solchen Polymers mit einem anderen chlorhaltigen oder chlorfreien Polymeren. Das chlorhaltige Polymer kann ein Emulsions-, Suspensions-oder Massepolymerisat sein.

Das sterisch gehinderte Amin ist ein Polyalkylpiperidinderivat und enthält mindestens eine Gruppe der Formel I 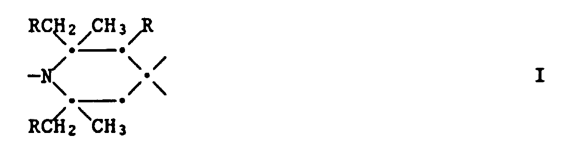 worin R Wasserstoff oder Methyl ist, und ist insbesondere ein Derivat des 2,2,6,6-Tetramethylpiperidins der Formel I, worin R Wasserstoff ist. In 4-Stellung des Piperidinrings sind diese Verbindungen vorzugsweise mit einem oder zwei polaren Gruppen oder einem Spiro-Ringsystem substituiert. Es kann sich bei diesen Verbindungen um niedermolekulare oder oligomere oder polymere Verbindungen handeln.

Von Bedeutung sind insbesondere die folgenden Klassen von Polyalkylpiperidinen.

a) Verbindungen der Formel II, 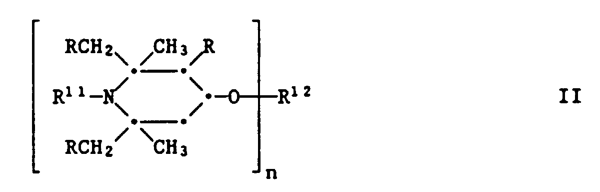 worin n eine Zahl von 1 bis 4, vorzugsweise 1 oder 2 bedeutet, R Wasserstoff oder Methyl bedeutet, R¹¹ Wasserstoff, Oxyl, Hydroxyl, C₁-C₁₂-Alkyl, C₃-C₈ Alkenyl, C₃-C₈-Alkinyl, C₇-C₁₂-Aralkyl, C₁-C₁₈-Alkoxy, C₅-C₈-Cycloalkoxy, C₇-C₉-Phenylalkoxy, C₁-C₈-Alkanoyl, C₃-C₅-Alkenoyl, C₁-C₁₈-Alkanoyloxy, Benzyloxy, Glycidyl oder eine Gruppe -CH₂CH(OH)-Z, worin Z Wasserstoff, Methyl oder Phenyl ist, bedeutet, wobei R¹¹ vorzugsweise H, C₁-C₄-Alkyl, Allyl, Benzyl, Acetyl oder Acryloyl ist und R¹², wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von C₁-C₁₈-Alkyl kann R¹¹ oder R¹² z.B. die oben angeführten Gruppen und dazu noch beispielsweise n-Tridecyl, n-Tetradecyl, n-Hexadecyl oder n-Octadecyl darstellen.

Wenn R¹¹ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

R¹¹ ist als C₃-C₈-Alkinyl bevorzugt Propargyl.

Als C₇-C₁₂-Aralkyl ist R¹¹ insbesondere Phenethyl und vor allem Benzyl.

R¹¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.

Bedeutet R¹² einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.

Bedeutet R¹² einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt R¹² einen dreiwertigen Rest einer Tricarbonsäure dar, so bedeutet es z.B. einen Trimellitsäure-, Citronensäure- oder Nitrilotriessigsäurerest.

Stellt R¹² einen vierwertigen Rest einer Tetracarbonsäure dar, so bedeutet es z.B. den vierwertigen Rest von Butan-1,2,3,4-tetracarbonsäure oder von Pyromellitsäure.

Bedeutet R¹² einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel II, worin R Wasserstoff ist, R¹¹ Wasserstoff oder Methyl ist, n 2 ist und R¹² der Diacylrest einer aliphatischen Dicarbonsäure mit 4-12 C-Atomen ist.

Beispiele für Polyalkylpiperidin-Verbindungen dieser Klasse sind folgende Verbindungen:
1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy-1-n-butyl-2,2,6,6-tetramethylpiperidin)
27) Toluol-2',4'-bis-(4-carbamoyloxy-1-n-propyl-2,2,6,6-tetramethylpiperidin)
28) Tetra-(2,2,6,6-tetramethylpiperidin-4-yl)-butantetracarboxylat
29) Tetra-(1,2,2,6,6-pentamethylpiperidin-4-yl)-butantetracarboxylat
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

b) Verbindungen der Formel III, 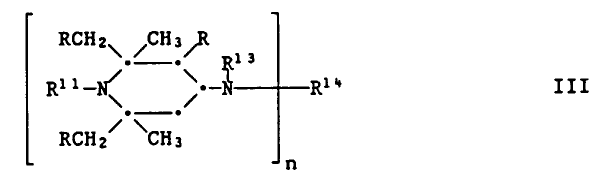 worin n die Zahl 1 oder 2 bedeutet, R und R¹¹ die unter a) angegebene Bedeutung haben, R¹³ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl, Benzoyl oder eine Gruppe der Formel 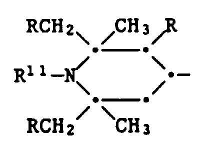 ist und R¹⁴ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R¹³ nicht Alkanoyl, Alkenoyl oder Benzoyl bedeutet, R¹⁴ auch einen zweiwertigen Rest einer aliphatischen, cycloaliphatischen oder aromatischen Dicarbonsäure oder Dicarbaminsäure oder auch die Gruppe -CO- bedeuten kann, oder R¹³ und R¹⁴ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten C₁-C₁₂- oder C₁-C₁₈-Alkyl dar, so haben sie die bereits unter a) angegebene Bedeutung.

Bedeuten etwaige Substituenten C₅-C₇-Cycloalkyl, so stellen sie insbesondere Cyclohexyl dar.

Als C₇-C₈-Aralkyl ist R¹³ insbesondere Phenylethyl oder vor allem Benzyl. Als C₂-C₅-Hydroxyalkyl ist R¹³ insbesondere 2-Hydroxyethyl oder 2-Hydroxypropyl.

R¹³ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.

Bedeutet R¹⁴ C₂-C₈-Alkenyl, dann handelt es sich z.B. um Allyl, Methallyl, 2-Butenyl, 2-Pentenyl, 2-Hexenyl oder 2-Octenyl.

R¹⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten C₂-C₁₂-Alkylen dar, so handelt es sich z.B um Ethylen, Propylen, 2,2-Dimethylpropylen, Tetramethylen, Hexamethylen, Octamethylen, Decamethylen oder Dodecamethylen.

Bedeuten etwaige Substituenten C₆-C₁₅-Arylen, so stellen sie z.B. o-, m- oder p-Phenylen, 1,4-Naphthylen oder 4,4′-Diphenylen dar.

Als C₆-C₁₂-Cycloalkylen ist D insbesondere Cyclohexylen.

Bevorzugt sind Verbindungen der Formel III, worin n 1 oder 2 ist, R Wasserstoff ist, R¹¹ Wasserstoff oder Methyl ist, R¹³ Wasserstoff, C₁-C₁₂-Alkyl oder eine Gruppe der Formel 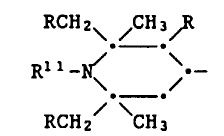 ist und R¹⁴ im Fall von n=1 Wasserstoff oder C₁-C₁₂-Alkyl ist, und im Fall von n=2 C₂-C₈-Alkylen ist.

Beispiele für Polyalkylpiperidin-Verbindungen dieser Klasse sind folgende Verbindungen:
37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-diacetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel 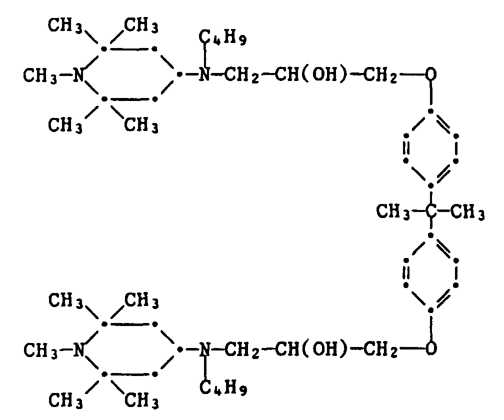
47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetramethylpiperidin
49) 4-Methacrylamido-1,2,2,6,6-pentamethylpiperidin

c) Verbindungen der Formel IV, 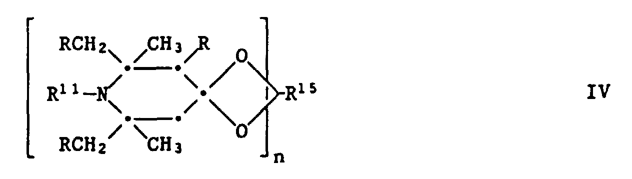 worin n die Zahl 1 oder 2 bedeutet, R und R¹¹ die unter a) angegebene Bedeutung haben und R¹⁵, wenn n 1 ist, C₂-C₈-Alkylen oder -Hydroxyalkylen oder C₄-C₂₂-Acyloxyalkylen, wenn n 2 ist, die Gruppe (-CH₂)₂C(CH₂-)₂ bedeutet.

Bedeutet R¹⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als C₄-C₂₂-Acyloxyalkylen bedeutet R¹⁵ z.B. 2-Ethyl-2-acetoxymethylpropylen.

Beispiele für Polyalkylpiperidin-Verbindungen dieser Klasse sind folgende Verbindungen:
50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro [5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5"-(1",3"-dioxan)-2"-spiro-4"'-(2"',2'",6"',6"'-tetramethylpiperidin).

d) Verbindungen der Formeln VA, VB und VC 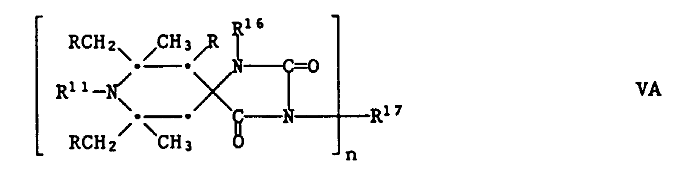 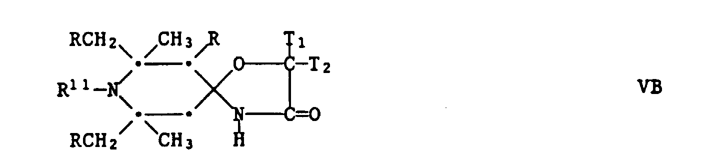 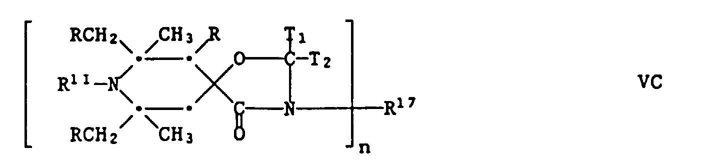 worin n die Zahl 1 oder 2 bedeutet, R und R¹¹ die unter a) angegebene Bedeutung haben, R¹⁶ Wasserstoff, C₁-C₁₂-Alkyl, Allyl, Benzyl, Glycidyl oder C₂-C₆-Alkoxyalkyl ist und R¹⁷, wenn n 1 ist, Wasserstoff, C₁-C₁₂-Alkyl, C₃-C₅-Alkenyl, C₇-C₉-Aralkyl, C₅-C₇ Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂-CH(OH)-CH₂-, worin D C₂-C₁₀ Alkylen, C₆-C₁₅-Arylen, C₆-C₁₂ Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.

Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt R¹⁷ C₃-C₅-Alkenyl dar, so bedeutet es z.B. 1-Propenyl, Allyl, Methallyl, 2-Butenyl oder 2-Pentenyl.

Als C₇-C₉-Aralkyl sind R¹⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein. Bedeutet R¹⁷ C₂-C₄-Hydroxyalkyl, so stellt es z.B. 2-Hydroxyethyl, 2-Hydroxypropyl, 2-Hydroxybutyl oder 4-Hydroxybutyl dar.

Als C₆-C₁₀-Aryl bedeuten R¹⁷, T₁ und T₂ insbesondere Phenyl, α- oder B-Naphthyl, die gegebenenfalls mit Halogen oder C₁-C₄-Alkyl substituiert sind.

Stellt R¹⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen. Als C₄-C₁₂-Alkenylen bedeutet R¹⁷ insbesondere 2-Butenylen, 2-Pentenylen oder 3-Hexenylen.

Bedeutet R¹⁷ C₆-C₁₂ Arylen, so stellt es beispielsweise o-, m- oder p-Phenylen, 1,4-Naphthylen oder 4,4'-Diphenylen dar.

Bedeutet Z' C₂-C₁₂ Alkanoyl, so stellt es beispielsweise Propionyl, Butyryl, Octanoyl, Dodecanoyl, aber bevorzugt Acetyl dar.

D hat als C₂-C₁₀ Alkylen, C₆-C₁₅ Arylen oder C₆-C₁₂ Cycloalkylen die unter b) angegebene Bedeutung.

Beispiele für Polyalkylpiperidin-Verbindungen dieser Klasse sind folgende Verbindungen:
56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-propyl-7,7,9,9-tetramethyl-1-oxa-3,8-diaza-4-oxo-spiro-[4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan
65) 8-Acetyl-3-dodecyl-1,3,8-triaza-7,7,9,9-tetramethylspiro[4,5]-decan-2,4-dion
oder die Verbindungen der folgenden Formeln:

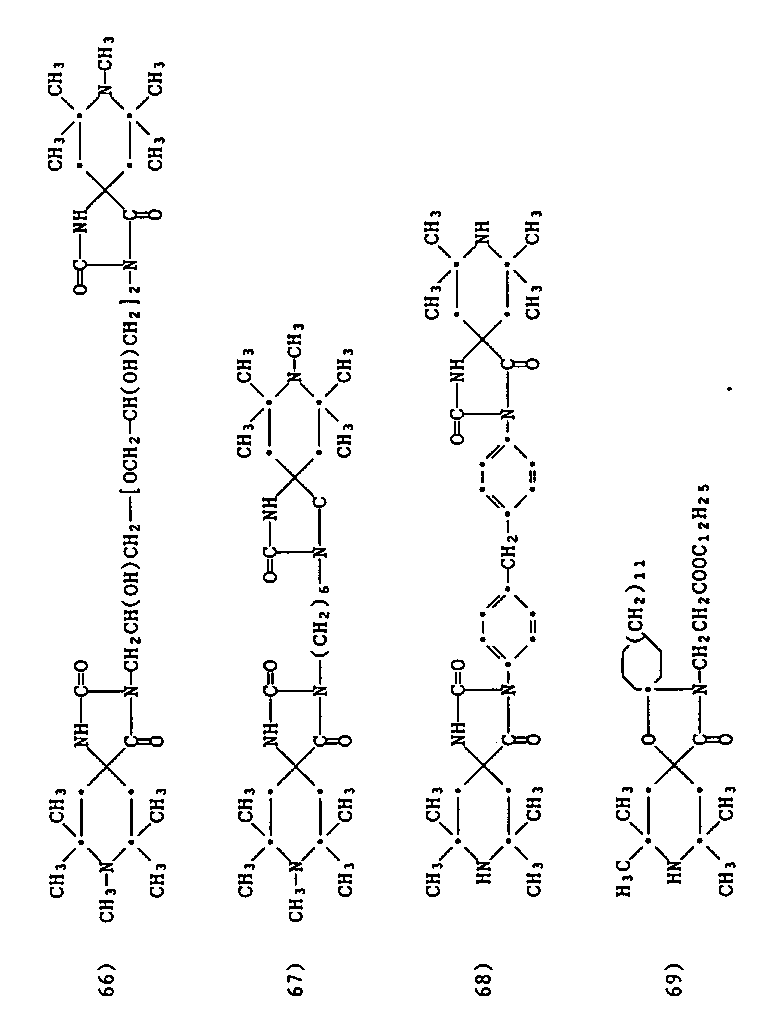

e) Verbindungen der Formel VI, 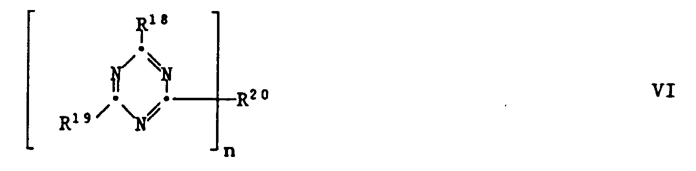 worin n die Zahl 1 oder 2 ist und R¹⁸ eine Gruppe der Formel 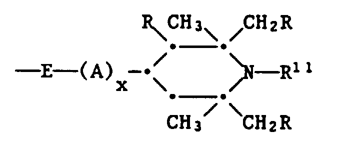 bedeutet, worin R und R¹¹ die unter a) angegebene Bedeutung haben, E -O- oder -NR²¹- ist, A C₂-C₆-Alkylen oder -(CH₂)₃-O- und x die Zahlen 0 oder 1 bedeuten, R¹⁹ gleich R¹⁸ oder eine der Gruppen -NR²¹R²², -OR²³, -NHCH₂OR²³ oder -N(CH₂OR²³)₂ ist, R²⁰, wenn n = 1 ist, gleich R¹⁸ oder R¹⁹, und wenn n = 2 ist, eine Gruppe -E-B-E- ist, worin B gegebenenfalls durch -N(R²¹)- unterbrochenes C₂-C₆-Alkylen bedeutet, R²¹ C₁-C₁₂-Alkyl, Cyclohexyl, Benzyl oder C₁-C₄-Hydroxyalkyl oder eine Gruppe der Formel 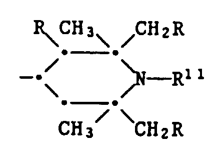 ist, R²² C₁-C₁₂ Alkyl, Cyclohexyl, Benzyl, C₁-C₄ Hydroxyalkyl und R²³ Wasserstoff, C₁-C₁₂ Alkyl oder Phenyl bedeuten oder R²¹ und R²² zusammen C₄-C₅-Alkylen oder -Oxaalkylen, beispielsweise 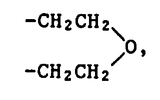 oder eine Gruppe der Formel 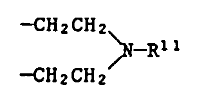 sind oder auch R²¹ und R²² jeweils eine Gruppe der Formel 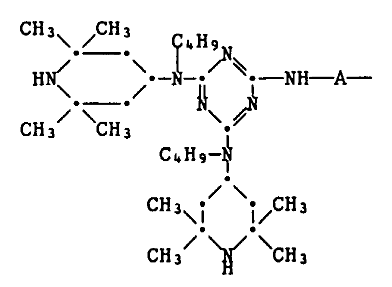 bedeuten.

Bedeuten etwaige Substituenten C₁-C₁₂-Alkyl, so stellen sie beispielsweise Hethyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A C₂-C₆ Alkylen, so stellt es beispielsweise Ethylen, Propylen, 2,2-Dimethylpropylen, Tetramethylen oder Hexamethylen dar.

Stellen R²¹ und R²² zusammen C₄-C₅-Alkylen oder -Oxaalkylen dar, so bedeutet dies z.B. Tetramethylen, Pentamethylen oder 3-Oxapentamethylen.

Bevorzugt sind Verbindungen der Formel VI, worin n 4 ist, R¹⁸ und R¹⁹ eine Gruppe 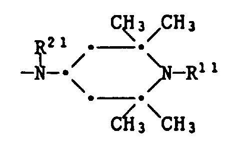 bedeuten, worin R¹¹ Wasserstoff oder Methyl ist und R²¹ Wasserstoff oder C₁-C₆-Alkyl ist, und R²⁰ den vierwertigen Rest eines aliphatischen Tetramins bedeutet.

Beispiele für Polyalkylpiperidin-Verbindungen der Klasse e) sind die Verbindungen der folgenden Formeln:

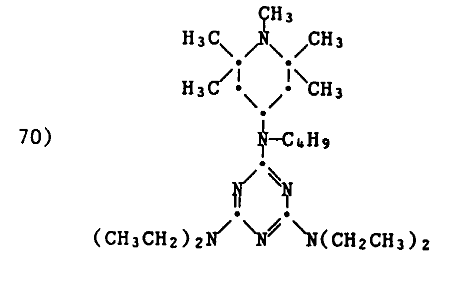

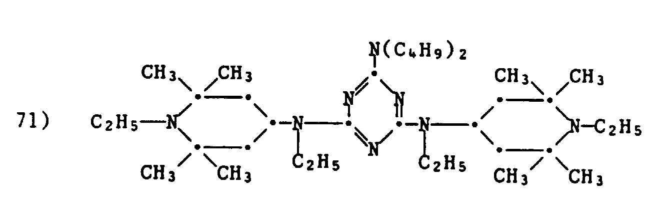

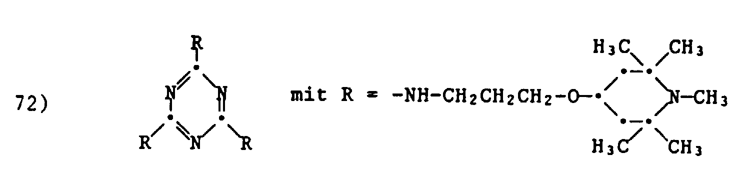

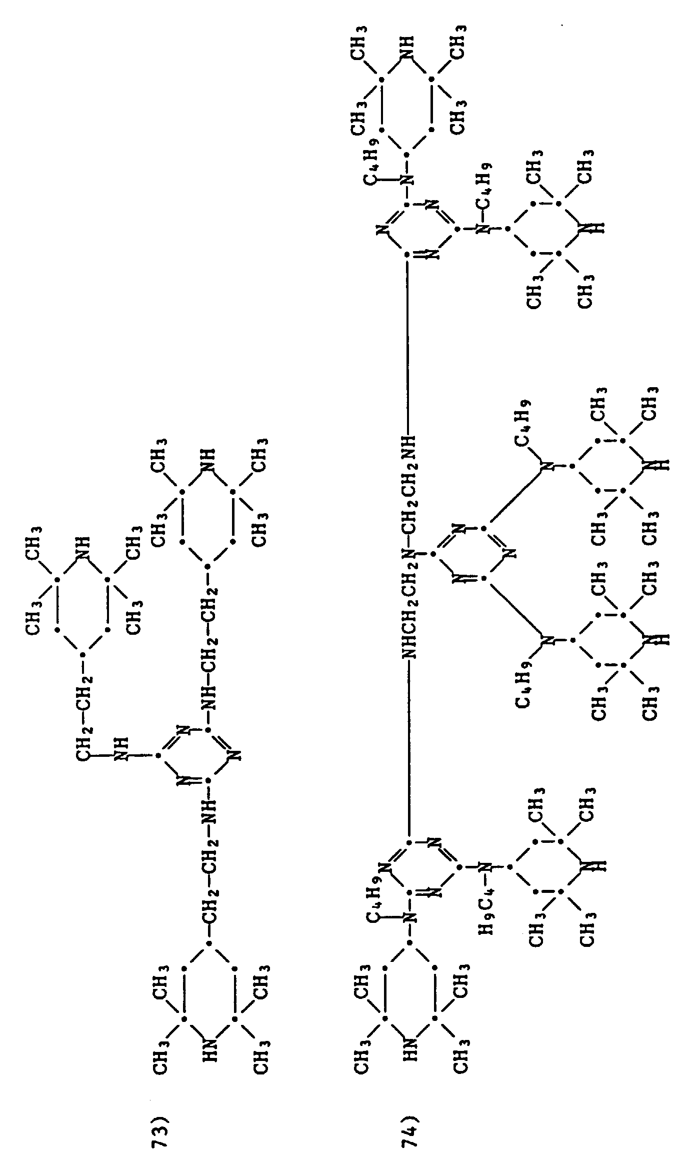

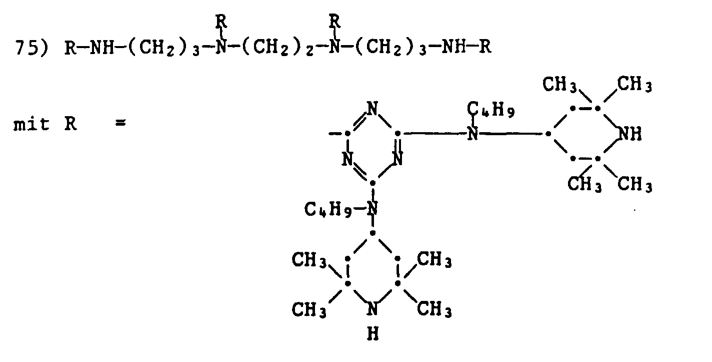

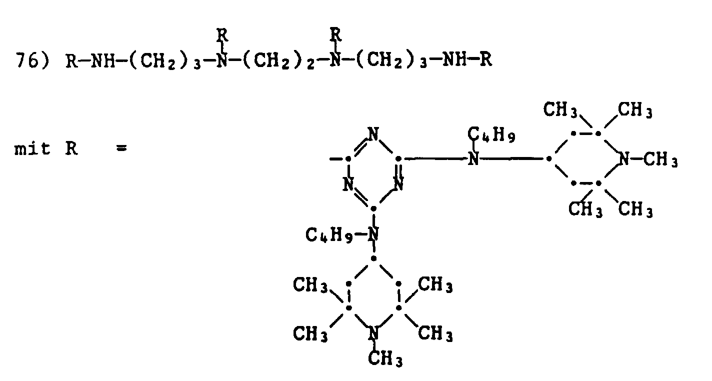

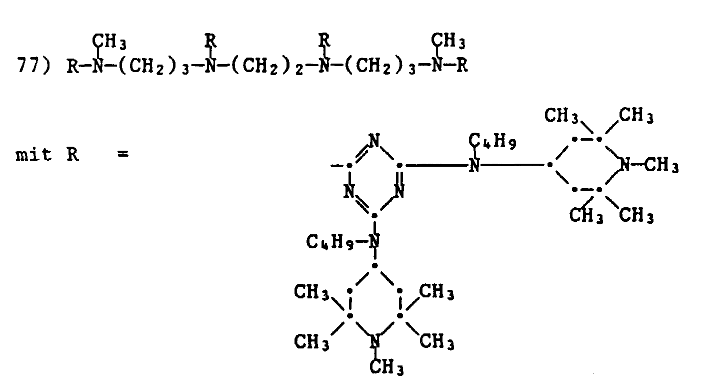

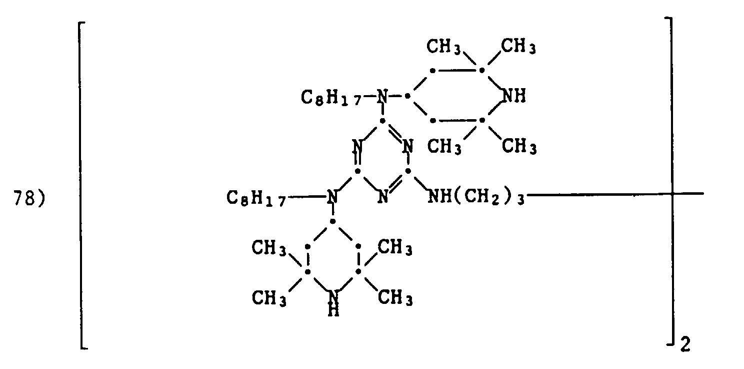

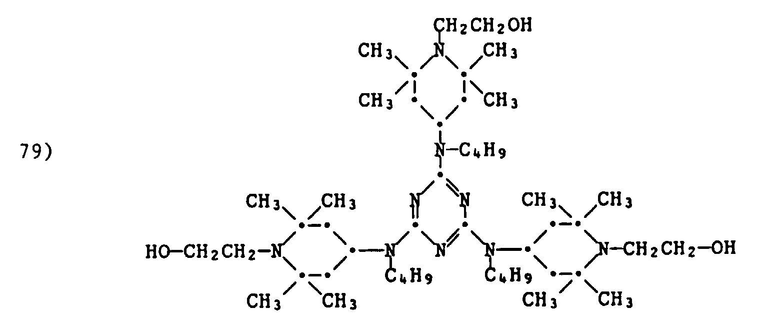

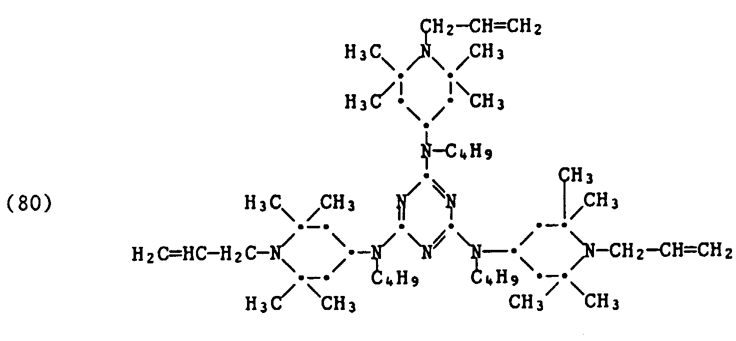

f) Oligomere oder polymere Verbindungen, deren wiederkehrende Struktureinheit einen Polyalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten. Darunter sind die Polyester und Polyaminotriazine bevorzugt.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

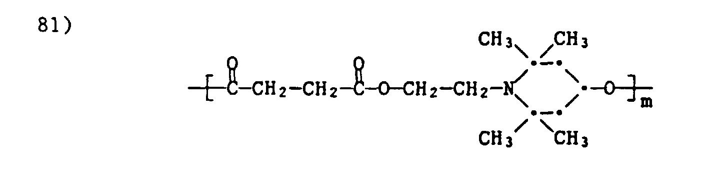

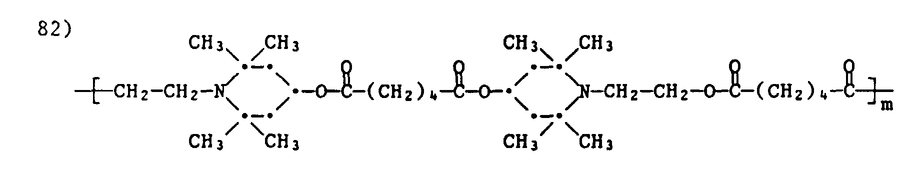

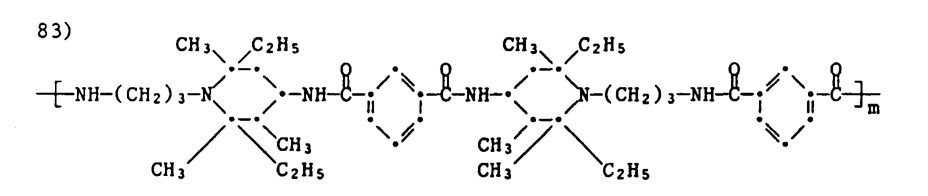

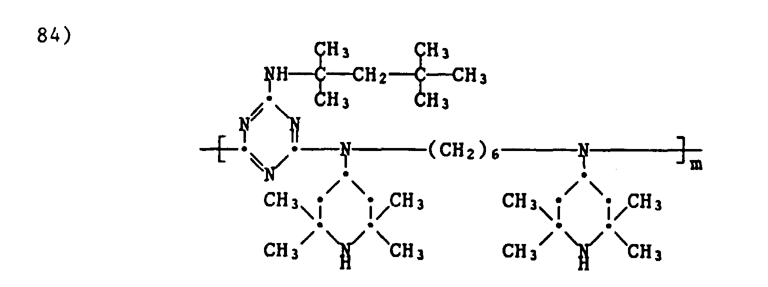

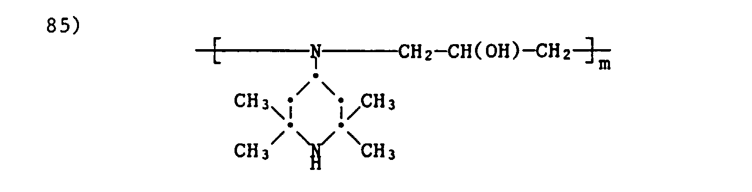

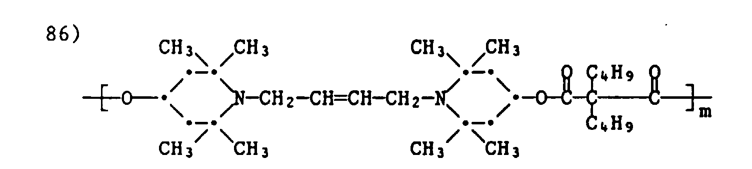

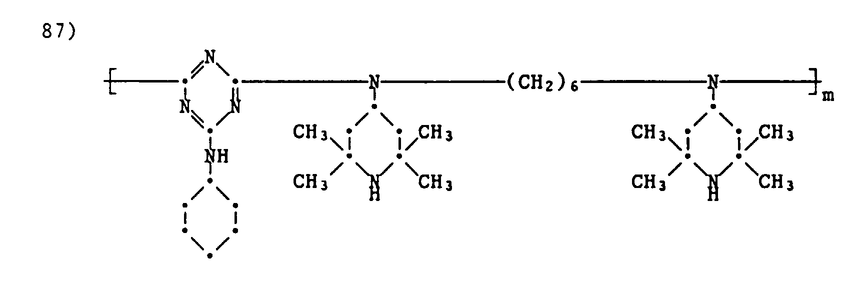

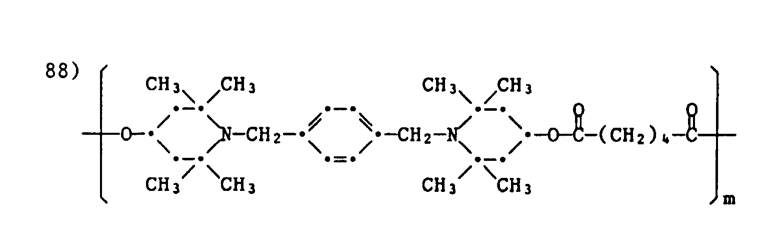

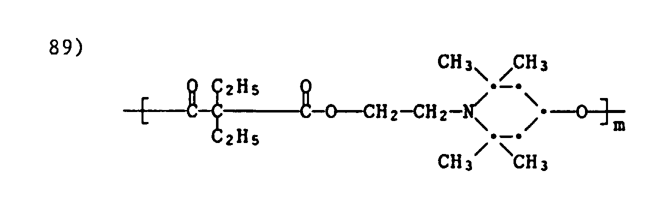

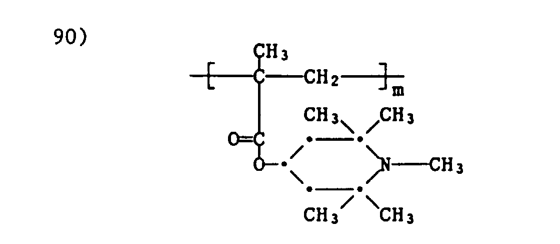

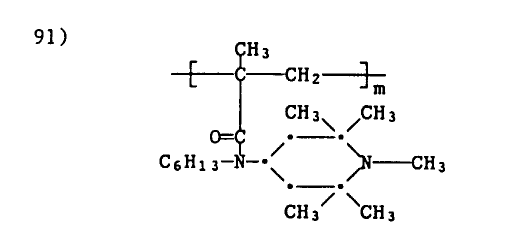

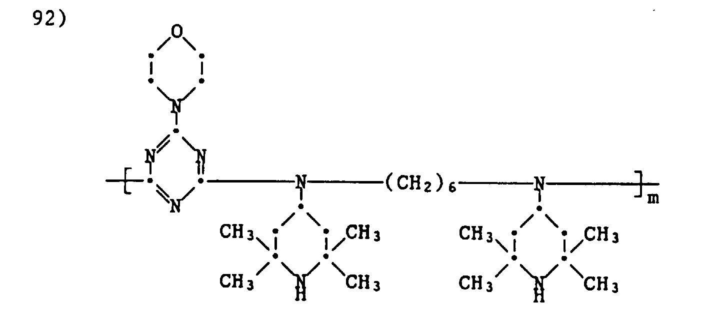

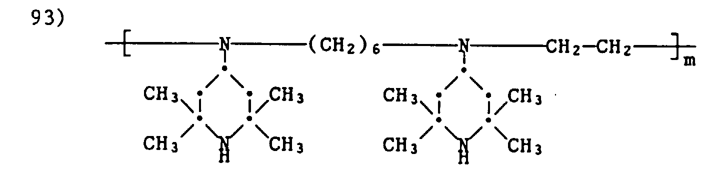

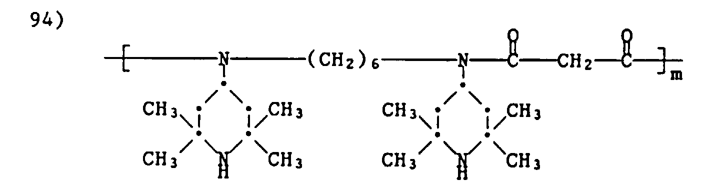

Von diesen Klassen sind die Klassen a), d), e) und f) besonders bevorzugt, insbesondere die Verbindungen 10, 13, 14, 23, 24, 28, 29, 63, 65, 75, 77, 81, 84 und 92.

Diese sterisch gehinderten Amine sind bekannte Verbindungen, viele davon sind kommerziell erhältlich. Es können auch zwei verschiedene sterisch gehinderte Amine verwendet werden, beispielsweise eines von niedrigem und eines von höherem Molekulargewicht, wie dies im US-A-4 692 486 beschrieben ist.

Die als Komponente c) verwendete Zinkverbindung kann eine organische Zinkverbindung sein, z.B. das Zinksalz einer Carbonsäure, Sulfonsäure, Phosphonsäure, Phosphorigsäure oder Phosphinsäure oder das Zinksalz eines Phenols oder ein Zinkchelat, wie z.B. das Enolat einer 1,3-Diketoverbindung. Die Komponente c) kann auch eine anorganische Zinkverbindung sein, z.B. ein Oxid, Hydroxid, Carbonat, basisches Carbonat, Phosphat, Phosphit, Sulfat, Chlorid, Fluorid oder Hypophosphit.

Bevorzugt ist c) das Zinksalz einer C₁-C₂₂-Carbonsäure, eines C₆-C₁₈-Phenols oder eines C₅-C₃₀-1,3-Diketons. Die Carbonsäure kann eine gesättigte oder ungesättigte aliphatische oder cycloaliphatische Carbonsäure sein oder eine aromatische oder aromatisch-aliphatische Carbonsäure sein. Auch Aminsäuren und deren Derivate kommen infrage.

Beispiele hierfür sind Ameisensäure, Essigsäure, Propionsäure, Buttersäure, Capronsäure, 2-Ethylhexansäure, Caprylsäure, Laurinsäure, Myristylsäure, Oenanthsäure, Neodecansäure, Palmitinsäure, Stearinsäure, Isostearinsäure, 12-Hydroxystearinsäure, Ölsäure, Behensäure, Montansäure, Benzoesäure, Chlorbenzoesäure, p-tert. Butylbenzoesäure, p-Dodecylbenzoesäure, Salicylsäure, 3,4-Di-tert.butyl-4-hydroxybenzoesäure, Tolylsäure, Dimethylbenzoesäure, p-Dimethylaminobenzoesäure, Thioglykolsäure, Milchsäure, Abietinsäure, β-Hercaptopropionsäure, β-Dodecylmercaptopropionsäure, Phenylessigsäure oder der Halbester oder das Halbamid einer Dicarbonsäure. Auch Zinksalze von langkettigen α-Aminocarbonsäuren und N-Acyl-aminosäuren, z.B. N-Stearoyl-glycin, sind hierfür geeignet.

Beispiele für C₆-C₁₈-Phenole sind Phenol, Kresol, Xylenol, 4-tert. Butylphenol, 4-Nonylphenol, 4-Dodecylphenol, 4-Chlorphenol oder 2-Hydroxydiphenyl.

Die C₅-C₃₀-1,3-Diketone sind durch die Formel VII (siehe unten) beschrieben. Beispielhaft genannt seien Acetylaceton, Butanoylaceton, Benzoyl-6-hydroxy-hexamoylmethan, Stearoylaceton, Lauroylaceton, Benzoylaceton, Dibenzoylmethan, Lauroyl-benzoylmethan. Stearoyl-benzoylmethan oder Bis(4-methylbenzoyl)-methan.

Bevorzugt ist c) das Zinksalz einer C₇-C₂₀-Carbonsäure. Es können auch Gemische von Zinkverbindungen verwendet werden, z.B. die Zinksalze technischer Carbonsäuregemische oder technischer Alkylphenolgemische. Besonders bevorzugt sind Zinkstearat, Zinklaurat, Zinkoleat, Zink-2-ethylhexanoat und Zinkneodecanoat.

Als Komponete d) verwendbare 1,3-Dicarbonylverbindungen können lineare oder cyclische Dicarbonylverbindungen sein. Bevorzugt werden Dicarbonylverbindungen der Formel VII verwendet, 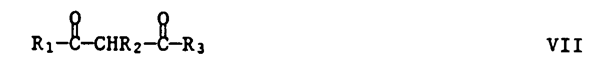
worin R₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R₅-S-R₆ oder -R₅-O-R₆ bedeutet,
R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Grupe -CO-R₄ bedeutet,
R₃ eine der für R₁ gegebenen Bedeutungen hat oder C₁-C₁₈-Alkoxy bedeutet,
R₄ C₁-C₄-Alkyl oder Phenyl bedeutet,
R₅ C₁-C₁₀-Alkylen bedeutet und
R₆ C₁-C₁₂-Alkyl, Phenyl, C₇-C₁₈-Alkylphenyl oder C₇-C₁₀-Phenylalkyl bedeutet.
Hierzu gehören die Hydroxylgruppen enthaltenden Diketone der EP-A-346 279 und die Oxa- und Thia-diketone der EP-A-307 358.

R₁ und R₃ als Alkyl können insbesondere C₁-C₁₈-Alkyl sein, wie z.B Methyl, Ethyl, n-Propyl, Isopropyl, n-Butyl, tert. Butyl, Pentyl, Hexyl, Heptyl, Octyl, Decyl, Dodecyl oder Octadecyl.

R₁ und R₃ als Hydroxyalkyl stellen insbesondere eine Gruppe 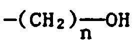 dar, worin n 5, 6 oder 7 ist.

R₁ und R₃ als Alkenyl können beispielsweise Vinyl, Allyl, Methallyl, 1-Butenyl, 1-Hexenyl oder Oleyl bedeuten, vorzugsweise Allyl.

R₁ und R₃ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

R₁ und R₃ als Phenylalkyl sind insbesondere Benzyl.
R₂ und R₃ als Cycloalkyl oder Alkyl-cycloalkyl sind insbesondere Cyclohexyl oder Methylcyclohexyl.

R₂ als Alkyl kann insbesondere C₁-C₄-Alkyl sein.
R₂ als C₂-C₁₂-Alkenyl kann insbesondere Allyl sein. R₂ als Alkylphenyl kann insbesondere Tolyl sein. R₂ als Phenylalkyl kann insbesondere Benzyl sein. Vorzugsweise ist R₂ Wasserstoff.
R₃ als Alkoxy kann z.B. Methoxy, Ethoxy, Butoxy, Hexyloxy, Octyloxy, Dodecyloxy, Tridecyloxy, Tetradecyloxy oder Octadecyloxy sein.
R₅ als C₁-C₁₀-Alkylen ist insbesondere C₂-C₄-Alkylen.
R₆ als Alkyl ist insbesondere C₄-C₁₂-Alkyl, wie z.B. Butyl, Hexyl, Octyl, Decyl oder Dodecyl. R₆ als Alkylphenyl ist insbesondere Tolyl.
R₆ als Phenylalkyl ist insbesondere Benzyl.

Beispiele für 1,3-Dicarbonylverbindungen der Formel VII sind Acetylaceton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Benzoyl-6-hydroxy-hexanoylmethan, Stearoyl-benzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester und Stearoylessigsäure-ethyl-, -propyl-, -butyl-, -hexyl- oder -octylester.

Bevorzugt als Komponente d) sind Verbindungen der Formel VII, worin R₁ C₁-C₁₈-Alkyl, C₂-C₁₈-Oxaalkyl, C₂-C₁₈-Thiaalkyl, Phenyl, durch OH, Methyl oder Methoxy substituiertes Phenyl, C₇-C₁₀-Phenylalkyl oder Cyclohexyl ist, R₂ Wasserstoff ist und R₃ eine der für R₁ gegebenen Bedeutungen hat.

Bevorzugt enthalten die erfindungsgemässen Zusammensetzungen auf 100 Gew.-Teile der Komponente (a) 0,01 bis 3 Gew.-Teile der Komponente (b) und 0,02 bis 4 Gew.-Teile der Komponente (c), insbesondere 0,1 bis 2 Gew.-Teile der Komponente (b) und 0,1 bis 2 Gew.-Teile der Komponente (c).

Falls die Zusammensetzung auch eine 1,3-Dicarbonylverbindung als Komponente (d) enthält, so enthält sie bevorzugt auf 100 Gew.-Teile der Komponente (a) 0,05 bis 1 Gew.-Teile, insbesondere 0,1 bis 0,5 Gew.-Teile der Komponente (d). Sofern diese 1,3-Dicarbonylverbindung anteilweise als Zink-chelat vorliegt, beträgt die Einsatzmenge 0,1 bis 2,5 Gew.-Teile.

Darüber hinaus kann die Zusammensetzung weitere Zusätze enthalten, wie sie für die Verarbeitung und Stabilisierung von chlorhaltigen Polymeren bekannt und üblich sind. Dies sind z.B. Weichmacher, Phosphite, metallfreie PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Lösungsmittel, Gleitmittel oder Flammschutzmittel.

Die Zusammensetzung enthält jedoch ausser den Zinkverbindungen keine Metallcarboxylate, wie sie oft zur Stabilisierung von chlorhaltigen Polymeren verwendet werden, wie z.B. Carbonsäuresalze von Calcium, Magnesium, Barium, Cadmium oder Blei, oder Organozinnverbindungen. Wohl aber kann die Zusammensetzung Chelate der Metalle Calcium, Magnesium und Barium enthalten. Diese Chelate leiten sich bevorzugt von 1,3-Diketonen der Formel VII ab. Besonders bevorzugt sind die Acetylacetonate von Calcium, Magnesium und Barium. Die Einsatzmengen auf 100 Gew.-Teile der Komponente a) liegen zwischen 0,05 und 3, insbesondere zwischen 0,1 und 2 Gew.-Teilen.

Beispiele für Weichmacher sind die Ester von Phthalsäure, Adipin-, Azelain-, Sebazin- oder Trimellitsäure, Polyester aus aliphatischen Diolen und Dicarbonsäuren, Phosphorsäureester, Chlorparaffine oder epoxidierte Fettsäureester. Weitere Beispiele mögen dem "Taschenbuch der Kunststoff-Additive", R. Gächter, H. Müller, Hanser-Verlag 1983, Seite 280-307, entnommen werden. Die Weichmacher können in einer Menge von 15 bis 100 Gew.-Teilen, bezogen auf 100 Gew.-Teile des chlorhaltigen Polymeren, verwendet werden.

Organische Phosphite sind bekannte Costabilisatoren für mit Metallcarboxylaten stabilisierte chlorhaltige Polymere, insbesondere in Kombination mit Zink-, Barium- oder Cadmium-Stabilisatoren. Beispiele von solchen Phosphiten sind Trioctyl-, Tridecyl-, Tridodecylphosphit, Decyl-diphenylphosphit, Triphenylphosphit, Phenyl-didecylphosphit, Tris-(nonylphenyl)-phosphit, Trilaurylphosphit, Trioctadecylphosphit, Distearyl-pentaerythritdiphosphit, 2,4-Di-tert.butylphenyl-di(dodecyl)phosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, 3,9-Bis-(2,4-di-tert.butylphenoxy)-2,4,8,10-tetraoxa-3,9-diphosphaspiro[5.5]undecan.

Metallfreie Stabilisatoren für chlorhaltige Polymere sind z.B. aliphatische Polyole, wie Pentaerythrit, Dipentaerythrit, Trimethylolpropan, Tris(2-hydroxyethyl)-isocyanurat, Sorbit, Mannit oder Furan; Aminocrotonsäureester; Mercaptobenzoesäureester; Dehydracetsäure; 2,4-Dihydroxybenzophenon; Enolcarbonate, wie sie in EP-A-224 438 beschrieben sind; aromatische Amide, wie Sie in EP-A-122 228 und 174 412 beschrieben sind; sowie Stickstoff-haltige Heterocyclen, wie sie in den EP-A- 2007, 22087, 22749, 41479, 65934, 260 226, 354 179, DE-A-3 048 659, 3 124 853, GB-A-2 170 203 und US-A-4 908 398 beschrieben sind. Auch Mercaptobenzoesäureester wie z.B. Thiosalicylsäure-i-octylester kommen infrage.

Schlagzähigkeitsmodifikatoren sind z.B. Polyacrylate, Ethylen-Vinylacetat-Copolymere oder chloriertes Polyethylen. Wärmestandfestigkeitsverbesserer sind z.B. Poly(meth)acrylate, Acrylat-N-Methyl-Maleinimid-Copolymere oder Acrylnitril-Methylstyrol-Copolymere.

Epoxidverbindungen sind ebenfalls bekannte Costabilisatoren für chlorhaltige Polymere. Sie können bei geeigneter Struktur auch gleichzeitig als Weichmacher wirken. Beispiele für Epoxid-Stabilisatoren sind epoxidiertes Polybutadien, epoxidiertes Sojaöl, epoxidiertes Leinsamenöl, epoxidiertes Fischöl, epoxidierter Talg, Hethylbutyl- oder 2-Ethylhexylepoxystearat, Tris(epoxyropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd oder 3,4-Epoxycyclohexylmethyl-3,4-epoxycyclohexancarboxylat. Der Zusatz einer solchen Epoxidverbindung, insbesondere von epoxidiertem Sojaöl, ist eine bevorzugte Ausführungsart der vorliegenden Erfindung.

Beispiele für Antioxidantien sind:
1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Hethylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.
3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(a-methylbenzyl)-4-nonylphenol], 2,2'-Methylen-bis-[6-(a,a-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methylphenyl)-dicyclopentadien, Bis-[2-(3'-tert.butyl-2'-hydroxy-5'-methylbenzyl)-6-tert.butyl-4-methyl-phenyl]-terephthalat.
5. Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-iso-octylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.
7. Ester der β-(3,5-Di-tert.butyl-4-hydroxyphenyl)-propionsäure mit ein- oder mehrwertigen Alkoholen, wie z.B. mit Hethanol, Octadecanol, 1,6-Hexandiol, Neopentylglycol, Thiodiethylenglycol, Diethylenglycol, Triethylenglycol, Pentaerythrit, Tris-(hydroxyethyl)-iso-cyanurat, N,N'-Bis-(hydroxyethyl)-oxalsäurediamid.
8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-iso-cyanurat, N,N'-Bis-(hydroxyethyl)-oxalsäurediamid.
9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

Beispiele für UV-Absorber und Lichtschutzmittel sind:
1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-chlor-3'-tert.butyl-5'-methyl-, 3'-sec.Butyl-5'-tert.butyl, 4'-Octoxy-, 3',5'-Di-tert.amyl-, 3',5'-Bis-(a,a-dimethylbenzyl)-Derivat.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.
3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-carbomethoxy-β-cyanovinyl)-2-methyl-indolin.
5. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

Die verwendeten Pigmente können anorganische oder organische Pigmente sein, sie können auch metallische Pigmente sein. Füllstoffe sind z.B. Kreide, Russ, Graphit, Talk, Kaolin oder silikatische Mineralien. Die erfindungsgemässen Zusammensetzungen enthalten jedoch keine Hydrotalcit-Verbindungen.

Gleitmittel sind vor allem Fettsäuren und ihre, Ester und Amide, Fettalkohole, Paraffine und Polyethylenwachse. Flammschutzmittel sind vor allem Antimonoxid, aromatische Bromverbindungen und Phosphorsäureester.

Eine Uebersicht über die Verwendung von Schlagzähigkeitsmodifikatoren, Farbmitteln, Füllstoffen, Gleitmitteln und Flammschutzmitteln in chlorhaltigen Polymeren, speziell in PVC, findet sich im "Taschenbuch der Kunststoff-Additive", R. Gächter, H. Müller, Hanser-Verlag 1983.

Die erfindungsgemässen Zusammensetzungen können auf an sich bekannte Weise hergestellt werden. In der Regel wird das Stabilisatorsystem in das Polymer eingearbeitet, wozu eine Reihe von bekannten Vorrichtungen, wie Kalander, Mischer, Kneter und dergleichen, existieren.

Die nach vorliegender Erfindung stabilisierten Zusammensetzungen können auf bekannte Weise in die gewünschte Form gebracht werden. Solche Verfahren sind beispielsweise Kalandrieren, Extrudieren, Spritzgiessen, Sintern oder Spinnen, ferner Extrusions-Blasen oder eine Verarbeitung nach dem Plastisol-Verfahren.

Die erfindungsgemässen Zusammensetzungen eignen sich insbesondere in Form von Hart-Rezepturen für Hohlkörper (Flaschen), Verpackungsfolien (Tiefziehfolien), Blasfolien, Crash pad-Folien (Automobile), Rohre, Schwerprofile (Fensterrahmen), Lichtwandprofile, Bauprofile, Sidings, Fittings, Bürofolien und Apparatur-Gehäuse (Computer, Haushaltgeräte).

Andere Zusammensetzungen in Form von Weich-Rezepturen sind für Drahtummantelungen, Kabelisolierungen, Dekorationsfolien, Dachfolien, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Die nachfolgenden Beispiele erläutern die Erfindung näher. Alle Angaben in Teilen und Prozenten beziehen sich auf das Gewicht, sofern nicht anders angegben.

In den Beispielen werden folgende gehinderte Amine, Zinkverbindungen und 1,3-Diketone verwendet: 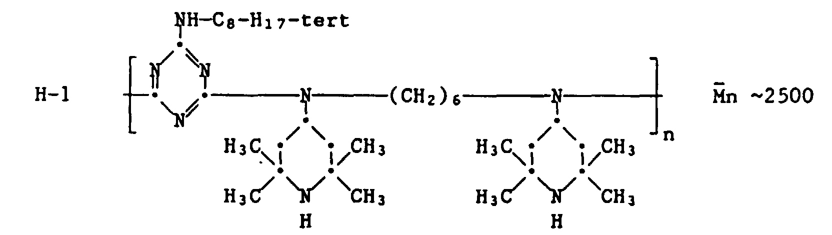
- H-2: Di-(2,2,6,6-tetramethylpiperidin-4-yl)-sebacat
- H-3: Di-(1,2,2,6,6-Pentamethylpiperidin-4-yl)-sebacat 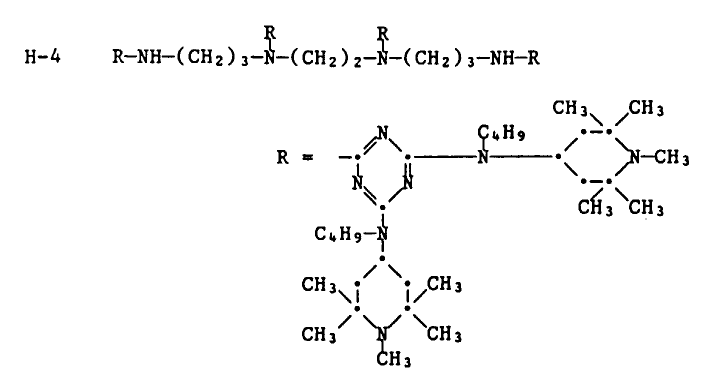
- Zn-1: Zink-neodecanoat
- Zn-2: Zink-stearat
- D-1: Benzoyl-stearoylmethan

### Beispiel 1:

Eine halbharte PVC-Zusammensetzung wird nach folgender Rezeptur (Gewichtsteile) bereitet:
100 Suspensions-PVC mit K-Wert 64 (Solvic® 264GA)
15 Dioctylphthalat
5 Epoxidiertes Soyaöl (Reoplast® 39)

Dazu kommen die in Tabelle 1 aufgeführten Stabilisatoren. Die Bestandteile werden 5 Minuten bei 180°C auf einer Mischwalze homogenisiert unter Bildung einer 0,3 mm starken Folie. Aus der Folie werden Probestreifen geschnitten, die in einem Testofen (Mathis Thermotester® LTF-ST) auf 180°C erwärmt werden. Die dabei auftretende Verfärbung wird in regelmässigen Zeitintervallen gemäss ASTMD 1925-70 als Yellowness-Index gemessen. Je höher dieser Index ist, desto starker ist die Verfärbung.

**Tabelle 1**

| Gehindertes Amin*) | Zn-Verbindung*) | Yellowness-Index nach | | | | | |
|---|---|---|---|---|---|---|---|
| | | 0 | 5 | 10 | 20 | 30 | 40 min |
| - | - | 19 | 64 | 85 | - | - | - |
| 0,3 H-1 | - | 31 | 92 | - | - | - | - |
| 0,3 H-1 | 0,3 Zn-1 | 6 | 26 | 32 | 48 | 71 | 91 |

| | | | | | | | |
|---|---|---|---|---|---|---|---|
| *) Teile auf 100 Teile PVC | | | | | | | |

Man ersieht daraus, dass das gehinderte Amin die Verfärbung verstärkt, die Kombination mit der Zinkverbindung jedoch eine starke Stabilisierung bewirkt, die die Lebensdauer des PVC vervielfacht.

### Beispiel 2:

Eine halbharte PVC-Rezeptur wird aus folgenden Komponenten (Gewichtsteile) bereitet:
100 Suspensions-PVC mit K-Wert 64 (Solvic® 264 GA)
17 Dioctylphthalat
3 Epoxidiertes Soyaöl (Reoplast® 39)

Dazu kommen die in Tabelle 2 angegebenen Stabilisatoren. Die Bereitung der Proben und ihre Prüfung geschieht wie in Beispiel 1 beschrieben.

**Tabelle 2**

| Gehindertes Amin*) | Zn-Verbindung*) | Diketon*) | Yellowness-Index nach | | | | |
|---|---|---|---|---|---|---|---|
| | | | 0 | 5 | 10 | 20 | 30 min |
| - | - | - | 20 | 22 | 31 | 53 | - |
| 0,3 H-2 | - | - | 32 | 53 | 82 | - | - |
| 0,3 H-2 | 0,25 Zn-1 | - | 4 | 7 | 12 | 37 | 92 |
| 0,3 H-2 | 0,35 Zn-1 | - | 4 | 7 | 11 | 30 | 62 |
| 0,3 H-2 | 0,25 Zn-1 | 0,3 D-1 | 1 | 2 | 2 | 8 | 43 |
| 0,3 H-2 | 0,35 Zn-1 | 0,3 D-1 | 1 | 1 | 2 | 6 | 27 |

| | | | | | | | |
|---|---|---|---|---|---|---|---|
| *) Teile auf 100 Teile PVC | | | | | | | |

Hieraus ist zu sehen, dass die stabilisierende Wirkung der Zinkverbindung (in Kombination mit dem gehinderten Amin) durch den Zusatz des Diketons merklich verstärkt wird.

### Beispiel 3:

Eine halbharte PVC-Rezeptur wird aus folgenden Komponenten (Gewichtsteile) bereitet:
100 Suspensions-PVC mit K-Wert 64 (Solvic® 264 GA)
20 Dioctylphthalat

Dazu kommen die in Tabelle 3 angegebenen Stabilisatoren. Die Bereitung der Proben und ihre Prüfung geschieht wie in Beispiel 1 beschrieben.

**Tabelle 3**

| Gehindertes Amin*) | Zn-Verbindung*) | Yellowness-Index nach | | | | | |
|---|---|---|---|---|---|---|---|
| | | 0 | 5 | 10 | 20 | 30 | 40 min |
| 0,3 H-1 | 0,3 Zn-1 | 6 | 20 | 26 | 48 | 90 | - |
| 0,3 H-1 | 0,4-Zn-1 | 6 | 18 | 21 | 25 | 56 | - |
| 0,6 H-1 | 0,6 Zn-1 | 6 | 20 | 24 | 40 | 55 | - |
| 0,6 H-1 | 0,8 Zn-1 | 6 | 15 | 19 | 28 | 43 | 57 |

| | | | | | | | |
|---|---|---|---|---|---|---|---|
| *) Teile auf 100 Teile PVC | | | | | | | |

### Beispiel 4:

Die Grundrezeptur ist dieselbe wie in Beispiel 2, es werden jedoch andere Stabilisatorkombinationen verwendet. Die Proben werden bereitet und geprüft wie in Beispiel 1 beschrieben. Die Ergebnisse sind in Tabelle 3 aufgeführt.

**Tabelle 4**

| Gehindertes Amin*) | Zn-Verbindung*) | Diketon*) | Yellowness-Index nach | | | | |
|---|---|---|---|---|---|---|---|
| | | | 0 | 5 | 10 | 20 | 30 min |
| - | - | - | 18 | 24 | 76 | - | - |
| 0,3 H-3 | - | - | 14 | 28 | 92 | - | - |
| 0,3 H-3 | 0,25 Zn-1 | - | 2 | 4 | 7 | 22 | 70 |
| 0,3 H-3 | 0,25 Zn-1 | 0,3 D-1 | 0,5 | 1 | 2 | 5 | 56 |
| 0,3 H-3 | 0,35 Zn-1 | - | 1,5 | 4 | 5 | 11 | 26 |
| 0,3 H-2 | 0,35 Zn-1 | 0,3 D-1 | 0,8 | 1 | 1 | 5 | 26 |

| | | | | | | | |
|---|---|---|---|---|---|---|---|
| *) Teile auf 100 Teile PVC | | | | | | | |

Dieses Beispiel zeigt, dass bei gleichbleibender Konzentration an gehindertem Amin sowohl die Erhöhung der Zink-Konzentration als auch der Zusatz des Diketons die Stabilisierung verstärkt. Die Wirkung des Diketons ist vor allem in den ersten 20 Minuten sehr deutlich.

### Beispiel 5:

Die Grundrezeptur ist dieselbe wie in Beispiel 3, jedoch werden andere Stabilisatorkombinationen verwendet. Die Proben werden bereitet und geprüft wie in Beispiel 1 beschrieben. Die Ergebnisse sind in Tabelle 5 aufgeführt.

**Tabelle 5**

| Gehindertes Amin*) | Zn-Verbindung*) | Yellowness-Index nach | | | | | | | |
|---|---|---|---|---|---|---|---|---|---|
| | | 0 | 5 | 10 | 20 | 30 | 40 | 50 | 60 min |
| 0,3 H-1 | 0,35 Zn-1 | 8 | 15 | 26 | 32 | 50 | - | - | - |
| 0,6 H-1 | 0,7 Zn-1 | 7 | 12 | 15 | 24 | 36 | 55 | | |
| 1,2 H-1 | 1,4 Zn-1 | 8 | 12 | 16 | 28 | 37 | 47 | 57 | 70 |
| 0,3 H-2 | 0,35 Zn-1 | 5 | 12 | 15 | 64 | - | - | - | - |
| 0,6 H-2 | 0,7 Zn-1 | 4 | 6 | 10 | 49 | 86 | - | - | - |
| 1,2 H-2 | 1,4 Zn-1 | 5 | 6 | 9 | 23 | 68 | 90 | - | - |

| | | | | | | | | | |
|---|---|---|---|---|---|---|---|---|---|
| *) Teile auf 100 Teile PVC | | | | | | | | | |

### Beispiel 6:

Eine harte PVC-Zusammensetzung wird aus 100 Teilen Suspensions-PVC vom K-Wert 60 (Corvic® S 60/104) und 3 Teilen eines epoxidierten Soyaöls (Reoplast® 39) bereitet. Dazu kommen die in Tabelle 6 angegebenen Stabilisatoren. Die Homogenisierung geschieht auf der Mischwalze bei 190°C/5 min unter Bildung einer 0,3 mm starken Folie. Die Prüfung der Proben erfolgt wie in Beispiel 1 beschrieben.

**Tabelle 6**

| Gehindertes Amin*) | Zn-Verbindung*) | Diketon*) | Yellowness-Index nach | | | | | |
|---|---|---|---|---|---|---|---|---|
| | | | 3 | 6 | 12 | 18 | 24 | 30 min |
| - | 0,8 Zn-2 | - | 15 | 17 | 20 | 120 | - | - |
| 0,3 H-4 | 0,8 Zn-2 | - | 19 | 22 | 33 | 45 | 50 | 56 |
| 0,3 H-4 | 0,8 Zn-2 | 0,2 D-1 | 9 | 11 | 16 | 26 | 37 | 53 |
| 0,3 H-1 | 0,8 Zn-2 | - | 24 | 28 | 36 | 46 | 56 | 65 |
| 0,3 H-1 | 0,8 Zn-2 | 0,2 D-1 | 8 | 10 | 13 | 19 | 29 | 39 |

| | | | | | | | | |
|---|---|---|---|---|---|---|---|---|
| *) Teile auf 100 Teile PVC | | | | | | | | |

Dieses Beispiel zeigt, das die stabilisierende Wirkung des Zinksalzes allein erheblich übertroffen wird von seiner Kombination mit dem gehinderten Amin. Es zeigt weiterhin die starke Wirkung des Diketons auf die Farbe in den ersten 20 Minuten.

## Patentansprüche

1. Stabilisierte chlorhaltige Polymerzusammensetzung, enthaltend
a) mindestens ein chlorhaltiges Polymer,
b) mindestens ein Polyalkylpiperidinderivat, das mindestens eine Gruppe der Formel I enthält, 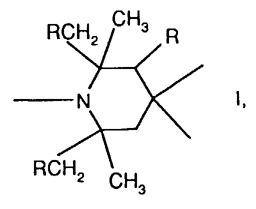 worin R Wasserstoff oder Methyl ist, und
c) mindestens eine organische oder anorganische Zinkverbindung
in Abwesenheit eines Metallcarboxylates von Calcium, Magnesium, Barium, Cadmium oder Blei, in Abwesenheit einer Organozinnverbindung, in Abwesenheit einer Verbindung aus der Reihe der Hydrotalcite und in Abwesenheit eines Treibmittels oder Schäumungsmittels.

2. Polymerzusammensetzung gemäss Anspruch 1, enthaltend
d) mindestens eine 1,3-Dicarbonylverbindung.

3. Polymerzusammensetzung gemäss Anspruch 1, dadurch gekennzeichnet, dass die Komponente a) ein Polyvinylchlorid oder ein mindestens 80 % Vinylchlorid enthaltendes Copolymer oder eine Mischung (Polyblend) eines solchen Polymers mit einem anderen chlorhaltigen oder chlorfreien Polymeren ist.

4. Polymerzusammensetzung gemäss Anspruch 1, worin R in Formel I Wasserstoff ist.

5. Polymerzusammensetzung gemäss Anspruch 1, dadurch gekennzeichnet, dass die Komponente b) ein Polyalkylpiperidinderivat der Formel II ist, 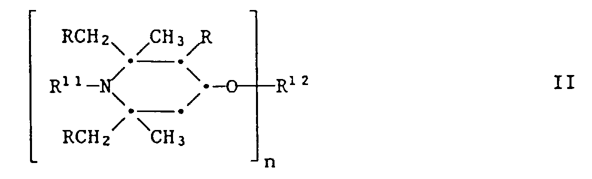 worin R Wasserstoff ist, R¹¹ Wasserstoff oder Methyl ist, n 2 ist und R¹² der Diacylrest einer aliphatischen Dicarbonsäure mit 4-12 C-Atomen ist.

6. Polymerzusammensetzung gemäss Anspruch 1, dadurch gekennzeichnet, dass die Komponente b) eine Polyalkylpiperidinverbindung der Formel VI ist, 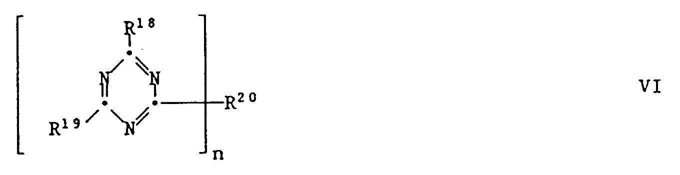 worin n 4 ist, R¹⁸ und R¹⁹ eine Gruppe 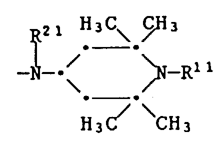 bedeuten, worin R¹¹ Wasserstoff oder Methyl ist und R²¹ Wasserstoff oder C₁-C₆-Alkyl ist, und R²⁰ den vierwertigen Rest eines aliphatischen Tetraamines bedeutet.

7. Polymerzusammensetzung gemäss Anspruch 1, dadurch gekennzeichnet, dass die Komponente b) eine oligomere oder polymere Polyalkylpiperidinverbindung aus der Reihe der Polyester oder Polyaminotriazine ist.

8. Polymerzusammensetzung gemäss Anspruch 1, dadurch gekennzeichnet, dass die Komponente c) das Zinksalz einer C₁-C₂₂-Carbonsäure, eines C₆-C₁₈-Phenols oder eines C₅-C₃₀-1,3-Diketons ist.

9. Polymerzusammensetzung gemäss Anspruch 8, dadurch gekennzeichnet, dass als weitere Komponenten Chelate von Calcium, Magnesium und Barium anwesend sind, die sich von 1,3-Diketon der Formel VII gemäss Anspruch 11 ableiten.

10. Polymerzusammensetzung gemäss Anspruch 8, dadurch gekennzeichnet, dass c) das Zinksalz einer C₇-C₂₀-Carbonsäure ist.

11. Polymerzusammensetzung gemäss Anspruch 2, dadurch gekennzeichnet, dass die Komponente d) eine 1,3-Dicarbonylverbindung der Formel VII ist, 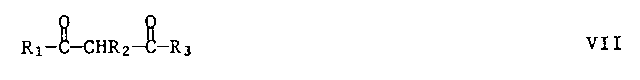
worin R₁ C₁-C₂₂-Alkyl, C₅-C₁₀-Hydroxyalkyl, C₂-C₁₈-Alkenyl, Phenyl, durch OH, C₂-C₄-Alkyl, C₁-C₄-Alkoxy oder Halogen substituiertes Phenyl, C₇-C₁₀-Phenylalkyl, C₅-C₁₂-cycloalkyl, durch C₁-C₄-Alkyl substituiertes C₅-C₁₂-Cycloalkyl oder eine Gruppe -R₅-S-R₆ oder -R₅-O-R₆ bedeutet,
R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO-R₄ bedeutet,
R₃ eine der für R₁ gegebenen Bedeutungen hat oder C₁-C₁₈-Alkoxy bedeutet,
R₄ C₁-C₄-Alkyl oder Phenyl bedeutet,
R₅ C₁-C₁₀-Alkylen bedeutet und
R₆ C₁-C₁₂-Alkyl, Phenyl, C₇-C₁₈-Alkylphenyl oder C₇-C₁₀-Phenylalkyl bedeutet.

12. Polymerzusammensetzung gemäss Anspruch 11, dadurch gekennzeichnet, dass die Komponente d) eine Verbindung der Formel VII ist, worin R₁ C₁-C₁₈-Alkyl, C₂-C₁₈-Oxaalkyl, C₂-C₁₈-Thiaalkyl, Phenyl, durch OH, Methyl oder Methoxy substituiertes Phenyl, C₇-C₁₀-Phenylalkyl oder Cyclohexyl ist, R₂ Wasserstoff ist und R₃ eine der für R₁ gegebenen Bedeutungen hat.

13. Polymerzusammensetzung gemäss Anspruch 1, enthaltend auf 100 Gew.-Teile (a) 0,01 bis 3 Gew.-Teile (b) und 0,02 bis 4 Gew.-Teile (c).

14. Polymerzusammensetzung gemäss Anspruch 13, enthaltend auf 100 Gew.-Teile (a) 0,1 bis 2 Gew.-Teile (b) und 0,1 bis 2 Gew.-Teile (c).

15. Polymerzusammensetzung gemäss Anspruch 2, enthaltend auf 100 Gew.-Teile (a) 0,05 bis 1 Gew.-Teil (d).

16. Polymerzusammensetzung gemäss Anspruch 1 oder 2, enthaltend ausser den Komponenten (a) bis (c) oder (a) bis (d) einen oder mehrere Zusatzstoffe aus der Reihe der Weichmacher, Phosphite, metallfreien PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Gleitmittel und Flammschutzmittel.

17. Verfahren zum Stabilisieren von chlorhaltigen Polymeren gegen Schädigung durch Wärme und Licht durch Zusatz von
a) mindestens einem Polyalkylpiperidinderivat, das mindestens eine Gruppe der Formel I enthält, 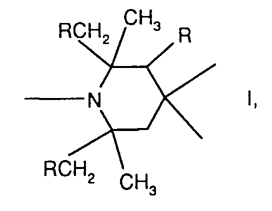 worin R Wasserstoff oder Methyl ist,
b) mindestens einer organischen oder anorganischen Zinkverbindung und gegebenenfalls weiteren Zusatzstoffen in Abwesenheit eines Metallcarboxylates von Calcium, Magnesium, Barium, Cadmium oder Blei, in Abwesenheit einer Organozinnverbindung, in Abwesenheit einer Verbindung aus der Reihe der Hydrotalcite und in Abwesenheit eines Treibmittels oder Schäumungsmittels.

18. Verfahren gemäss Anspruch 17 zum Stabilisieren von chlorhaltigen Polymeren gegen Schädigung durch Wärme und Licht durch Zusatz von
a) mindestens einem Polyalkylpiperidinderivat, das mindestens eine Gruppe der Formel I enthält, 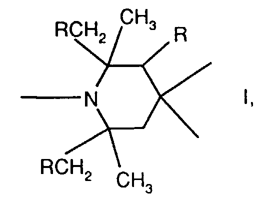 worin R Wasserstoff oder Methyl ist,
b) mindestens einer organischen oder anorganischen Zinkverbindung,
c) mindestens einer 1,3-Dicarbonylverbindung,
und gegebenenfalls weiteren Zusatzstoffen in Abwesenheit eines Metallcarboxylates von Calcium, Magnesium, Barium, Cadmium oder Blei, in Abwesenheit einer Organozinnverbindung, in Abwesenheit einer Verbindung aus der Reihe der Hydrotalcite und in Abwesenheit eines Treibmittels oder Schäumungsmittels.

## Claims

1. A stabilised chlorine-containing polymer composition comprising
a) at least one chlorine-containing polymer,
b) at least one polyalkylpiperidine derivative containing at least one group of the formula I 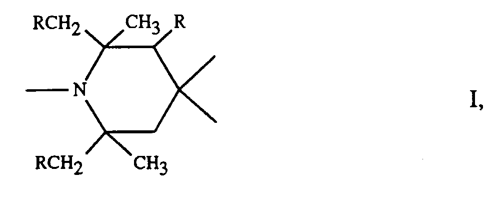 in which R is hydrogen or methyl,
c) at least one organic or inorganic zinc compound,
but no carboxylates of calcium, magnesium, barium cadmium or lead, no organotin compounds, no hydrotalcite compounds and no blowing agents or foaming agents.

2. A polymer composition according to claim 1, containing d) at least one 1,3-dicarbonyl compound.

3. A polymer composition according to claim 1, wherein component a) is a polyvinyl chloride or a copolymer containing at least 80 % of vinyl chloride, or a mixture (polyblend) of a polymer of this type with another chlorine-containing or chlorine-free polymer.

4. A polymer composition according to claim 1, in which R in the formula I is hydrogen.

5. A polymer composition according to claim 1, wherein component b) is a polyalkylpiperidine derivative of the formula II 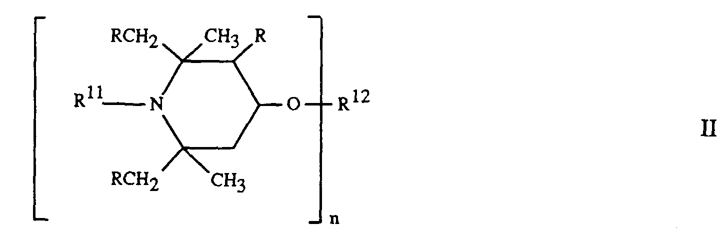 in which R is hydrogen, R¹¹ is hydrogen or methyl, n is 2 and R¹² is the diacyl radical of an aliphatic dicarboxylic acid having 4 to 12 carbon atoms.

6. A polymer composition according to claim 1, wherein component b) is a polyalkylpiperidine compound of the formula VI 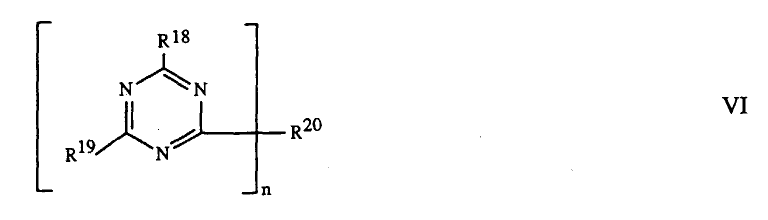 in which n is 4, R¹⁸ and R¹⁹ are a 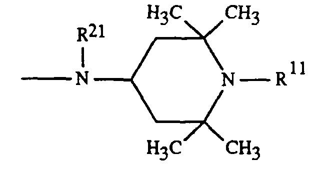 group in which R¹¹ is hydrogen or methyl and R²¹ is hydrogen or C₁-C₆alkyl, and R²⁰ is the tetravalent radical of an aliphatic tetramine.

7. A polymer composition according to claim 1, wherein component b) is an oligomeric or polymeric polyalkylpiperidine compound from the series comprising the polyesters and polyaminotriazines.

8. A polymer composition according to claim 1, wherein component c) is the zinc salt of a C₁-C₂₂carboxylic acid, of a C₆-C₁₈phenol or of a C₅-C₃₀-1,3-diketone.

9. A polymer composition according to claim 8, wherein, as further components, chelates of calcium, magnesium and barium derived from a 1,3-diketone of the formula VII as in claim 11 are present.

10. A polymer composition according to claim 8, wherein c) is the zinc salt of a C₇-C₂₀ carboxylic acid.

11. A polymer composition according to claim 2, wherein component d) is a 1,3-dicarbonyl compound of the formula VII 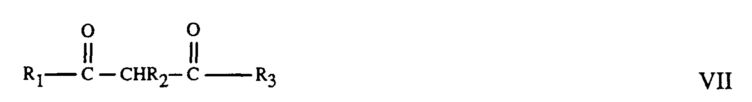 in which R₁ is C₁-C₂₂alkyl, C₅-C₁₀hydroxyalkyl, C₂-C₁₈alkenyl, phenyl, phenyl which is substituted by OH, C₂-C₄alkyl, C₁-C₄alkoxy or halogen, C₇-C₁₀phenylalkyl, C₅-C₁₂cycloalkyl, C₅-C₁₂cycloalkyl which is substituted by C₁-C₄alkyl, or an -R₅-S-R₆ or -R₅-O-R₆ group, R₂ is hydrogen, C₁-C₈alkyl, C₂-C₁₂alkenyl, phenyl, C₇-C₁₂alkylphenyl, C₇-C₁₀phenylalkyl or a -CO-R₄ group, R₃ is as defined for R₁ or is C₁-C₁₈alkoxy, R₄ is C₁-C₄alkyl or phenyl, R₅ is C₁-C₁₀alkylene, and R₆ is C₁-C₁₂alkyl, phenyl, C₇-C₁₈alkylphenyl or C₇-C₁₀phenylalkyl.

12. A polymer composition according to claim 11, wherein component d) is a compound of the formula VII in which R₁ is C₁-C₁₈alkyl, C₂-C₁₈oxoalkyl, C₂-C₁₈thiaalkyl, phenyl, phenyl which is substituted by OH, methyl or methoxy, C₇-C₁₀phenylalkyl or cyclohexyl, R₂ is hydrogen, and R₃ is as defined for R₁.

13. A polymer composition according to claim 1, comprising 100 parts by weight of (a), from 0.01 to 3 parts by weight of (b) and from 0.02 to 4 parts by weight of (c).

14. A polymer composition according to claim 13, comprising 100 parts by weight of (a), from 0.1 to 2 parts by weight of (b) and from 0.1 to 2 parts by weight of (c).

15. A polymer composition according to claim 2, containing from 0.05 to 1 part by weight of (d) per 100 parts by weight of (a).

16. A polymer composition according to claim 1 or 2, containing, in addition to components (a) to (c) or (a) to (d), one or more additives from the series comprising plasticisers, phosphites, metal-free PVC stabilisers, impact modifiers, heat resistance improvers, epoxide compounds, antioxidants, UV absorbers, light stabilisers, pigments, dyes, fillers, lubricants and flameproofing agents.

17. A process for stabilising chlorine-containing polymers against damage by heat and light, by adding
a) at least one polyalkylpiperidine derivative containing at least one group of the formula I 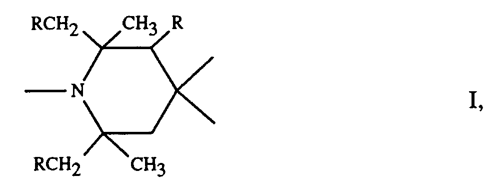 in which R is hydrogen or methyl,
b) at least one organic or inorganic zinc compound,
and, if desired, further additives, but no carboxylates of calcium, magnesium, barium, cadmium or lead, no organotin compounds, no hydrotalcite compounds and no blowing agents or foaming agents.

18. A process according to claim 17 for stabilising chlorine-containing polymers against damage by heat and light, by adding
a) at least one polyalkylpiperidine derivative containing at least one group of the formula I 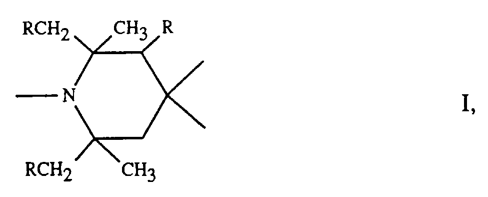 in which R is hydrogen or methyl,
b) at least one organic or inorganic zinc compound,
c) at least one 1,3-dicarbonyl compound,
and, if desired, further additives, but no carboxylates of calcium, magnesium, barium, cadmium or lead, no organotin compounds, no hydrotalcite compounds and no blowing agents or foaming agents.

## Revendications

1. Composition polymère chlorée stabilisée, contenant
a) au moins un polymère chloré,
b) au moins un dérivé de polyalkylpipéridine, qui contient au moins un groupe de formule I 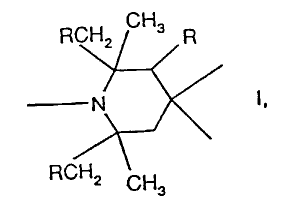 dans laquelle R est un hydrogène ou le radical méthyle, et
c) au moins un composé organique ou minéral du zinc,
en l'absence d'un carboxylate métallique de calcium, de magnésium, de baryum, de cadmium ou de plomb, en l'absence d'un composé organique de l'étain, en l'absence d'un composé de la série des hydrotalcites et en l'absence d'un agent porogène ou d'un agent d'expansion.

2. Composition polymère selon la revendication 1, contenant
d) au moins un composé 1,3-dicarbonylé.

3. Composition polymère selon la revendication 1, caractérisée en ce que le constituant a) est un poly-(chlorure de vinyle) ou un copolymère contenant au moins 80 % de chlorure de vinyle, ou un mélange (Polyblend) d'un tel polymère et d'un autre polymère chloré ou exempt de chlore.

4. Composition polymère selon la revendication 1, dans laquelle R, dans la formule I, est un hydrogène.

5. Composition polymère selon la revendication 1, caractérisée en ce que le constituant b) est un dérivé de polyalkylpipéridine de formule II 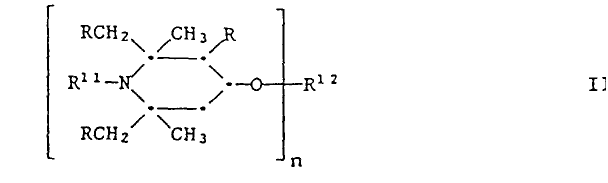 dans laquelle R est un hydrogène, R¹¹ est un hydrogène ou le radical méthyle, n vaut 2 et R¹² est le résidu diacyle d'un acide dicarboxylique aliphatique ayant de 4 à 12 atomes de carbone.

6. Composition polymère selon la revendication 1, caractérisée en ce que le constituant b) est une polyalkylpipéridine de formule VI 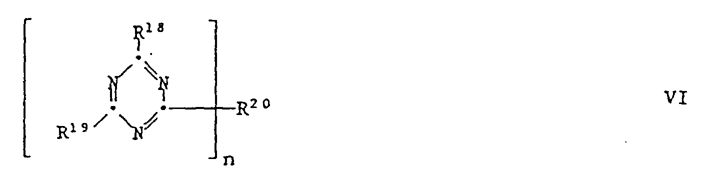 dans laquelle n vaut 4, R¹⁸ et R¹⁹ sont chacun un groupe 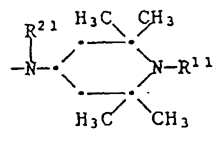 dans lequel R¹¹ est un hydrogène ou le radical méthyle, et R²¹ est un hydrogène ou un radical alkyle en C₁-C₆, et R²⁰ est le résidu tétravalent d'une tétraamine aliphatique.

7. Composition polymère selon la revendication 1, caractérisée en ce que le constituant b) est une polyalkylpipéridine oligomère ou polymère choisie dans la série des polyesters ou des polyaminotriazines.

8. Composition polymère selon la revendication 1, caractérisée en ce que le constituant c) est le sel de zinc d'un acide carboxylique en C₁-C₂₂, d'un phénol en C₆-C₁₈ ou d'une 1,3-dicétone en C₅-C₃₀.

9. Composition polymère selon la revendication 8, caractérisée en ce que sont présents, en tant qu'autres constituants, des chélates de calcium, de magnésium et de baryum, qui découlent de la 1,3-dicétone de formule VII selon la revendication 1.

10. Composition polymère selon la revendication 8, caractérisée en ce que c) est le sel de zinc d'un acide carboxylique en C₇-C₂₀.

11. Composition polymère selon la revendication 2, caractérisée en ce que le constituant d) est un composé 1,3-dicarbonylé de formule VII 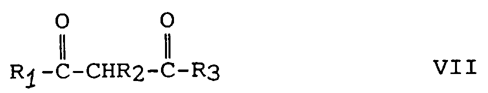
dans laquelle R₁ est un groupe alkyle en C₁-C₂₂, hydroxyalkyle en C₅-C₁₀, alcényle en C₂-C₁₈, phényle, phényle substitué par des substituants OH, alkyle en C₁-C₄, alcoxy en C₁-C₄ ou halogéno, phénylalkyle en C₇-C₁₀, cycloalkyle en C₅-C₁₂, cycloalkyle en C₅-C₁₂ substitué par des substituants alkyle en C₁-C₄, ou encore un groupe de formule -R₅-S-R₆ ou -R₅-O-R₆,
R₂ est un hydrogène ou un groupe alkyle en C₁-C₈, alcényle en C₂-C₁₂, phényle, alkylphényle en C₇-C₁₂, phénylalkyle en C₇-C₁₀ ou un groupe -CO-R₄,
R₃ a l'une des significations données pour R₁ ou est un groupe alcoxy en C₁-C₁₈,
R₄ est un groupe alkyle en C₁-C₄ ou phényle,
R₅ est un groupe alkylène en C₁-C₁₀, et
R₆ est un groupe alkyle en C₁-C₁₂, phényle, alkylphényle en C₇-C₁₈ ou phénylalkyle en C₇-C₁₀.

12. Composition polymère selon la revendication 11, caractérisée en ce que le constituant d) est un composé de formule VII dans laquelle R₁ est un groupe alkyle en C₁-C₁₈, oxaalkyle en C₂-C₁₈, thiaalkyle en C₂-C₁₈, phényle, phényle substitué par des substituants OH, méthyle ou méthoxy, phénylalkyle en C₇-C₁₀ ou cyclohexyle, R₂ est un hydrogène et R₃ a l'une des significations données pour R₁.

13. Composition polymère selon la revendication 1, contenant, pour 100 parties en poids de (a), 0,01 à 3 parties en poids de (b) et 0,02 à 4 parties en poids de (c).

14. Composition polymère selon la revendication 13, contenant, pour 100 parties en poids de (a), de 0,1 à 2 parties en poids de (b) et de 0,1 à 2 parties en poids de (c).

15. Composition polymère selon la revendication 2, contenant, pour 100 parties en poids de (a), de 0,05 à 1 partie en poids de (d).

16. Composition polymère selon la revendication 1 ou 2, contenant, outre les constituants (a) à (c) ou (a) à (d), un ou plusieurs additifs choisis parmi l'ensemble comprenant les plastifiants, les phosphites, les stabilisants de PVC exempts de métaux, les agents modifiant la résistance au choc, les agents améliorant la stabilité thermique, les composés époxydiques, les antioxydants, les agents absorbant les UV et les agents photoprotecteurs, les pigments, les colorants, les charges, les lubrifiants et les agents d'ignifugation.

17. Procédé pour stabiliser des polymères chlorés vis-à-vis d'une dégradation sous l'effet de la chaleur ou de la lumière, qui consiste à ajouter
a) au moins un dérivé de polyalkylpipéridine, contenant au moins un groupe de formule I 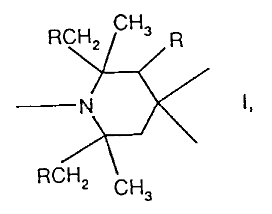 dans laquelle R est un hydrogène ou le radical méthyle,
b) au moins un composé organique ou minéral du zinc, et éventuellement d'autres additifs, en l'absence d'un carboxylate métallique de calcium, de magnésium, de baryum, de cadmium ou de plomb, en l'absence d'un composé organique de l'étain, en l'absence d'un composé de la série des hydrotalcites et en l'absence d'un agent porogène ou d'un agent d'expansion.

18. Procédé selon la revendication 17 pour stabiliser des polymères chlorés vis-à-vis d'une dégradation sous l'effet de la lumière et de la chaleur, qui consiste à ajouter
a) au moins un dérivé de polyalkylpipéridine contenant au moins un groupe de formule I 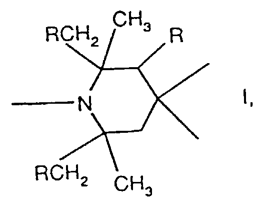 dans laquelle R est un hydrogène ou le radical méthyle,
b) au moins un composé organique ou minéral du zinc,
c) au moins un composé 1,3-dicarbonylé,
et éventuellement d'autres additifs, en l'absence d'un carboxylate métallique de calcium, de magnésium, de baryum, de cadmium ou de plomb, en l'absence d'un composé organique de l'étain, en l'absence d'un composé de la série des hydrotalcites et en l'absence d'un agent porogène ou d'un agent d'expansion.
